# EUROPEAN PATENT APPLICATION

(11) **EP 1 852 047 A2**
(43) Date of publication of application: **07.11.2007**
(21) Application number: 07004556.2
(22) Date of filing: 06.03.2007
(51) Int. Cl.: A47K 11/02, A47K 11/04, A61G 5/10

(54) **Dry toilet chair**

(30) Priority: 09.03.2006 IT CT20060005 U
(71) Applicant: Commerciale Sicula s.r.l., 94013 Leonforte EN (IT)
(72) Inventor: Vinciprova, Armando, 94013 Leonforte (EN) (IT)

(57) **Abstract**

Chair/seat or wheelchair as dry toilet, with bags for dry toilet with hermetical closing or appropriate tubular film coil, both suitable to dispose of human defecations hermetically and in safety and hygiene. That avoids laborious movements towards normal toilets for the physically disabled. Therefore, he/she will not be more the person to having to go to the cabinet but the cabinet (dry toilet) will be always to his/her availability. The chair/small easy chair/wheelchair works as a dry toilet, toilet that does not need fresh water and waste water line connections and that does not involve the problems of human waste drainage, typical of the portable chemical toilets of the type used on the caravans.

## Description

One of the greater problems in the treatment of the persons non-walking or with reduced motors abilities, chronics or temporaries, is that of reaching the space of hygienic services, above all during night hours or during rest time.

It can be very troublesome for the physically disabled reaching their toilets, often not en-suite with their bedrooms, but located at the end of long corridors or staircases.

Therefore the necessity has been seen to predispose hygienic services, usable in the same room where the disabled/patient is. This objective, however, has found large obstacles for the not availability, in place, of connecting points to fresh water and waste water pipe lines, that are necessary for the operation of fresh water flushing closets the fitting of which can be expensive. There have been therefore various solutions: from the simplest, as the night toilet bowl (inserted on appropriate chairs), to the most elaborated and effective, as the dry toilets (see patent EP 0401494) working without water and without drainage into the waste line connection, but only with bags with hermetic closing system (see the patent EP 0433793).

For greater understanding of the characteristics of these bags with hermetic closing system please read the following notes.

### WORKING CHARACTERISTICS OF THE BAGS FOR DRY TOILETS

Every bag
Is entirely made of highly recyclable polyethylene.

**Provided** with:
- circular (or oval) shaped cover in polyethylene, with rigid bordures and grooving turned down in order to fit with the bordures of the bag. Inside the bordures an insulating gasket is placed ensuring a watertight closing with the bag;
- bag in polyethylene, of circular (or oval) horizontal section, equipped in its top part of rigid bordures that fit those of the cover;
- packet containing polyhacrilated of sodio powder, white color, odorless, of very low toxicity and above all not irritating. The packet must be opened before each use and the content poured inside the bag. The powder has the function to gelatinize the liquid faecal substances.
- finished the use, the cover goes on the bag for the closing - the closing can be mechanical or manual - after that the bag, sealed, may be put in the container of solid city/domestic wastes.

The dry toilets described above, however, have the problem that, having a mechanical operation (manual/pedal lever to be set in action each time) and lacking of arms and back, are of little use to old people or to the physically disabled. Neither the folding dry toilets appear more functional as they lack of arms and backs and have a manual closing system of the bags.

From here the the necessity to find a solution to the technical problems of the models above mentioned.

The proposed solution is to produce an appropriate chair/small easy chair (on request equipped with wheels for easier movement), adapted for the sitting of a person with movement difficulties, that has a device for the lodging of the bags with hermetical closing system and where the closing of them can happen with the simple manual pressure (therefore without any mechanism).

The lodging device is made of a fixed base, in wood material (but also metallic, plastic or other material adapted) having approximately the same section of the sitting, having, in its central part, hole (of round or oval section) bordered with a groove for the easy lodging of the collar of the hermetic bag. The device will be covered with the sitting of the chair, which will be opened/closed through fixed hinge on the cited base. Therefore, when the chair will not be used as a dry toilet, the sitting-cover will be lowered and will cover the base of the dry toilet, so that it will seem a normal chair/easy small chair and could also be used in such way. When, instead, it will have to be used like dry toilet, it will be enough to raise the sitting, to lodge on the base the hermetic bag and to proceed to use it. After use, the cover will be applied on the bordure of the bag and the sittin will be lowerd and by a simple manual pressure, the cover will be sealed with the bag. After that, one will proceed to the removal of the bag as illustrated in the working characteristics of it.

The above described application could be realized also on wheelchairs with the following opportune adaptations: the sides under the sitting will be fitted with guides on which an extractable rigid collar will be fixed; on such collar it will come lodged the bag ready for use; once the bag is inserted in the collar, the latter will be pushed inside - with manual pressure - under the sitting and in correspondence of the hole; after use, the collar will be extracted and one will proceed to the hermetical closing of the bag (applying the cover over the bordure of the bag and exercising a pressure by hands).

As a variation to the model above-mentioned, the hermetical closing system bags can be substituted by a tubular suitable film coil that, at each use, will package the accumulated defecations. The film piece used for the collection of the defecations will be detached from the rest of the coil by a mechanical/warm procedure and will come sealed with system of electrical welding or clips.

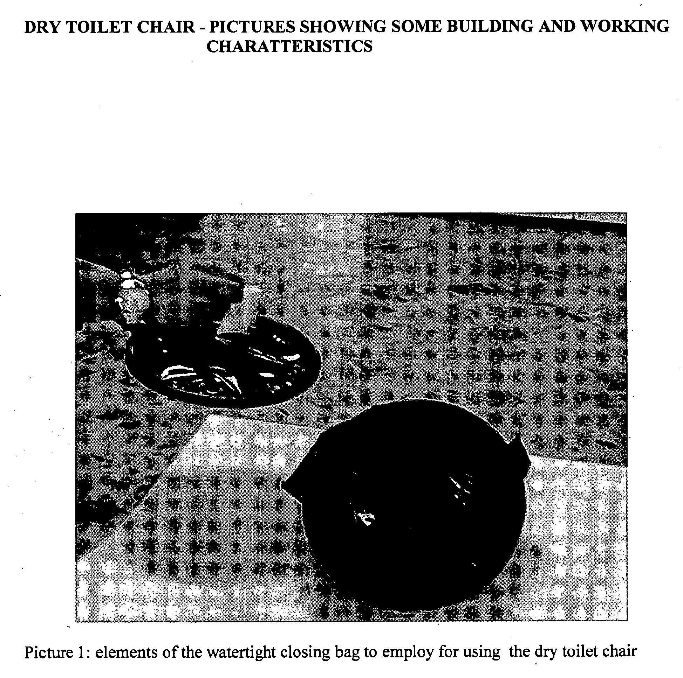

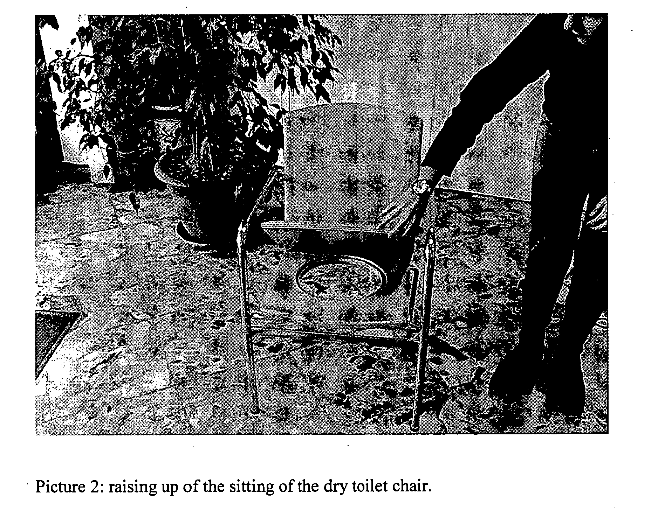

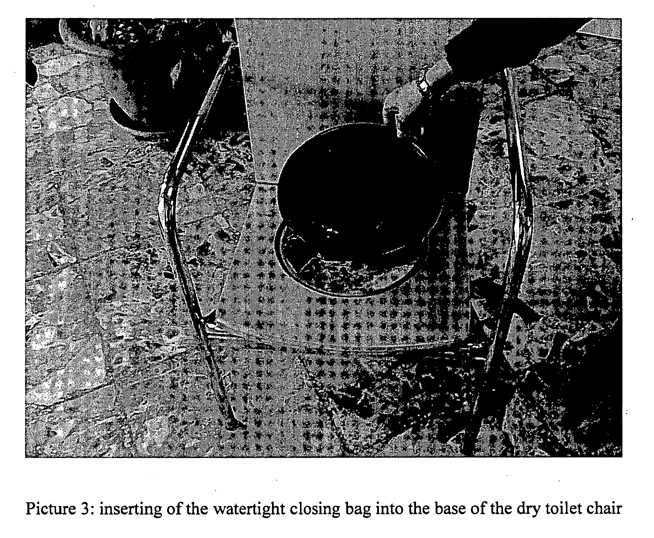

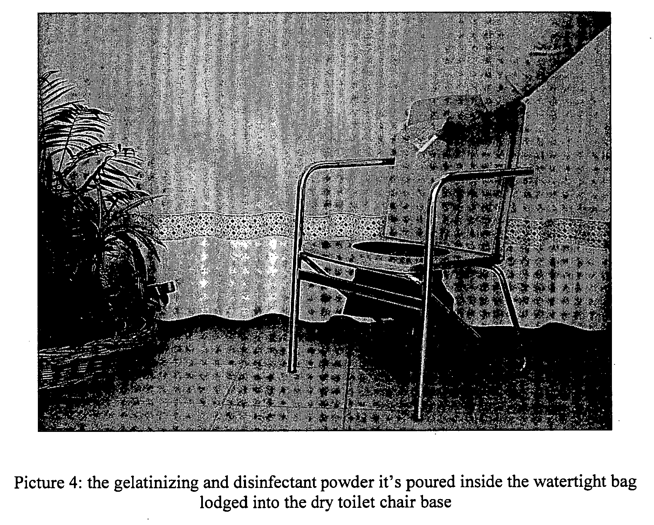

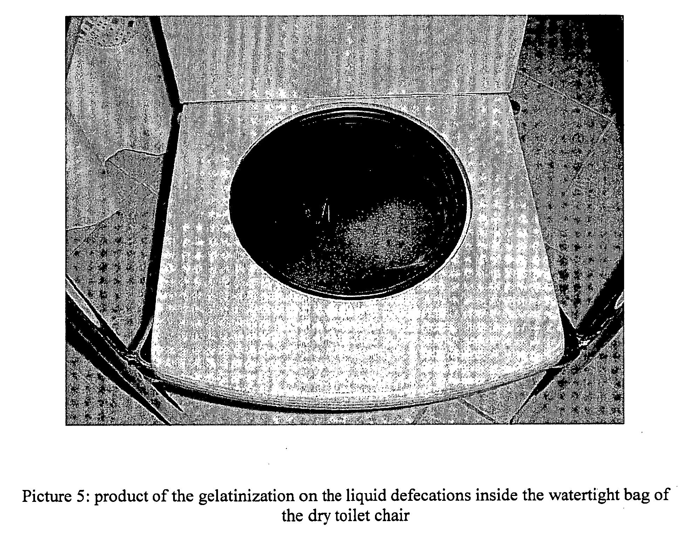

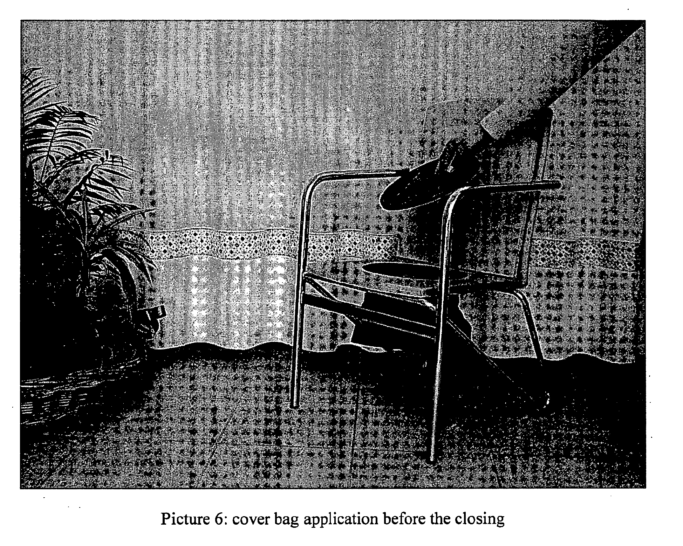

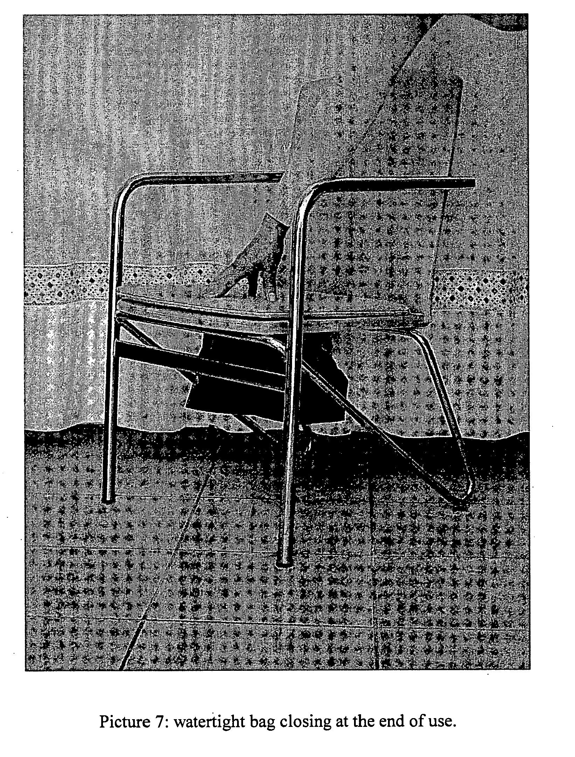

## Claims

1. Chair/small easy chair, with variable auto body and chassis (either in the employed material or in the design), also with function of dry toilet, by using proper bags hermetically sealed, having the following peculiar equipments:
a) **Raiseble/lowerable seating -** the sitting of the chair/small easy chair is fixed with hinge to the base, so that can be raised in perpendicular position to the base, during the use like dry toilet and closed, in parallel position to the base, when not in use. Such sitting has also the function to close and seal the cover of the bag with the bag, in the following sequence: 1) before its lowering, the cover of the bag will be laid on the top bordure of the bag; 2) on its lowering and with a normal manual pressure there will be a perfect sealing between the bordures of the cover and the bag (the closing will be hermetic also thanks to the gasket in the socket of the bordure of the cover);
b) **suitable Base for the lodging of the bag** - the base of the chair, realizable with wood material (or metallic, plastic or other), has a section and dimension nearly equal to the sitting and has, in the central part, a hole with diameter suitable for the insertion of the bag and encircled (such hole) by a bordure groove, in order to accommodate the bordure of the bag;
c) **Back** - the back of the chair will have to be realized with the due robustness and ergonomic characteristics to guarantee a secure and comfortable support to the customer;
d) **Arms** - they will have to be two, one for side, and realized with the due robustness and ergonomicsty, to guarantee a sure and comfortable support to the customer during the sitting/raising manoeuvres and also during the use like dry toilet or chair/small easy chair;
e) **Bags** - they are hermetic sealeble bags, good for dry toilet, the characteristics of which can be viewed on patent EP 0433793, and here given in brief as follows:
**WORKING CHARACTERISTICS OF THE BAGS FOR DRY TOILETS**
Every bag
Is entirely made of highly recyclable polyethylene.
**Provided** with:
• circular (or oval) shaped cover in polyethylene, with rigid bordures and grooving turned down in order to fit with the bordures of the bag. Inside the bordures an insulating gasket is placed ensuring a watertight closing with the bag;
• bag in polyethylene, of circular (or oval) horizontal section, equipped in its top part of rigid bordures that fit those of the cover;
• packet containing polyhacrilated of sodio powder, white color, odorless, of very low toxicity and above all not irritating. The packet must be opened before each use and the content poured inside the bag. The powder has the function to gelatinize the liquid faecal substances.
• finished the use, the cover goes on the bag for the closing - the closing can be mechanical or manual - after that the bag, sealed, may be put in the container of solid city/domestic wastes.
f) **Variations:** to the use of the bags for the dry toilet is possible to replace a tubular suitable film coil that, for each use, will manifacture the accumulated defecations. The film piece used for the collection of the defecations will be detached from the rest of the coil by a warmth/mechanical procedure and will be sealed with system of electrical welding or clips. In presence of this variation the sitting will not have more the function of closing, but only of sitting, exactly, and covering the base.

2. Wheelchair, with variable auto body and chassis (either in the employed material or in the design), also with function of dry toilet, by employing of proper bags hermetically sealed, having the following peculiar equipments:
a) **Holed seat** - the sitting of the wheelchair has hole, in the central part, through which the defecations are expelled by gravitational force. In commerce various models of wheelchairs with pierced sitting already exist.
b) **rigid collar for the lodging of the bag** - the part under the sitting of the wheelchair will be provided with guides holed for the support and the sliding of a collar which will be put in place or pulled out. It will have the function to support and to lodge the bag. Therefore, before using the chair as dry toilet, the bag have to be inserted in such collar (spreading inside the disinfectant- gelatinizing substance) then the collar will be pushed towards the inside, to reach the sitting of the chair. In such position the bag will be found in axis with the hole of the sitting of the wheelchair, so that, when used, the defecation will fall straight into the bag. After use, the collar will have to be extracted and the bag will come closed with the relative cover through the normal pressure of the hands.
c) **Bags** - they are hermetic sealable bags, good for dry toilet, the characteristics of which are to be found at the the letter e) of the point 1) of the present claims.
d) **Variation:** to the using of the bags for dry toilets is possible to replace a tubular suitable film coil that, at each use, will manifacture the accumulated defecations. The film piece used for the collection of the defecations will be detached from the rest of the coil with a warmth/mechanical procedure and will be sealed by electrical welding or clipping system. In presence of this variation the installation of the guides and the collar will not be more necessary.
